# FASCICULE DE BREVET EUROPEEN

(11) **EP 1 442 282 B1**
(45) Date de publication et mention de la délivrance du brevet: **01.03.2006**
(21) Numéro de dépôt: 02800644.3
(22) Date de dépôt: 09.10.2002
(51) Int. Cl.: G01N 21/39

(54) **DISPOSITIF A LASER COUPLE A UNE CAVITE PAR RETROACTION OPTIQUE POUR LA DETECTION DE TRACES DE GAZ**
LASERVORRICHTUNG MIT OPTISCHER RÜCKKOPPLUNG ZUR DETEKTION VON SPURENGASEN
LASER DEVICE COUPLED TO A CAVITY BY OPTICAL FEEDBACK FOR DETECTING GAS TRACES

(30) Priorité: 10.10.2001 FR 0113052
(43) Date de publication de la demande: 04.08.2004
(73) Titulaire: UNIVERSITE JOSEPH FOURIER, 38041 Grenoble Cédex 9 (FR)
(72) Inventeur: MORVILLE, Jérôme, F-69001 Lyon (FR); ROMANINI, Daniele, F-38000 Grenoble (FR); CHENEVIER, Marc, F-38330 Saint Nazaire les Eymes (FR)
(74) Mandataire: de Beaumont, Michel
(86) Numéro de dépôt international: PCT/FR2002/003438
(87) Numéro de publication internationale: WO 2003/031949

(56) Documents cités:
- WO-A-99/57542
- US-A- 5 903 358

## Description

La présente invention concerne la détection de gaz à l'état de traces. Elle concerne plus particulièrement un dispositif de détection de gaz à l'état de traces dans une cavité résonante selon la revendication 1.

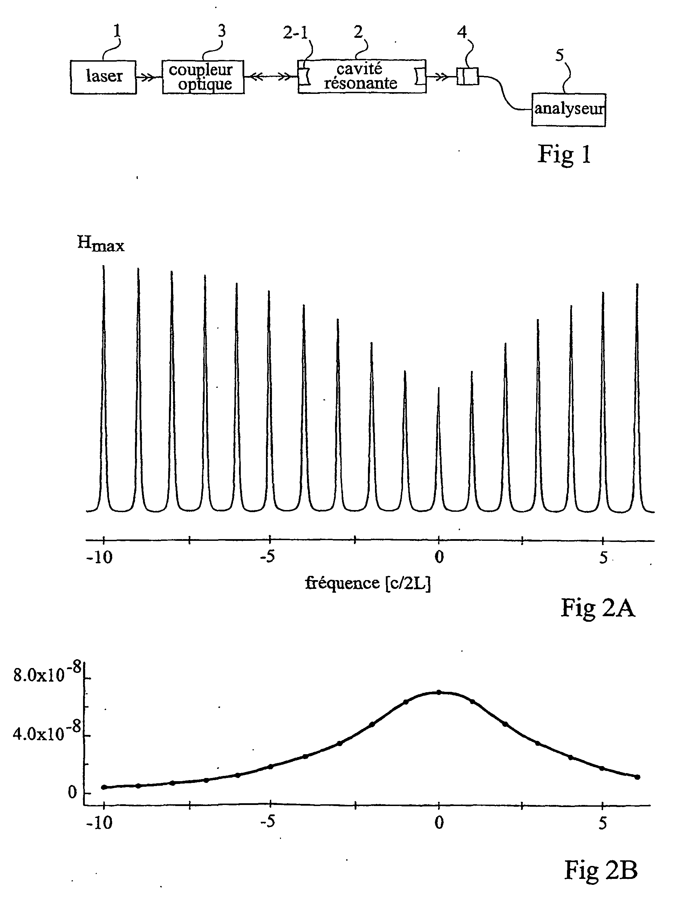

La figure 1 illustre le schéma de base d'un procédé de mesure d'absorption par spectroscopie dans une cavité résonante. De la lumière est émise par un laser 1 dans une cavité optique résonante 2 par l'intermédiaire d'un système de couplage optique 3. La lumière sortant de la cavité résonante est reçue par un photodétecteur 4 et est envoyée à un analyseur 5. Si la fréquence du laser varie, on aura un maximum du signal reçu par le photodétecteur pour chaque mode de la cavité. Si la cavité contient une espèce chimique présentant une raie d'absorption aux longueurs d'onde des photons injectés, la transmission sera réduite en fonction de l'absorption. A partir du spectre de transmission, on obtient le spectre d'absorption de la même façon que pour un spectre d'absorption classique directe. Mais cette fois, le signal d'absorption est multiplié par la finesse de la cavité et l'on devrait normalement pouvoir faire des mesures d'absorption avec une très grande sensibilité. Une courbe de transmission représentant l'intensité transmise en fonction de la fréquence est illustrée en figure 2A, et l'on déduit de cette courbe l'absorption de l'espèce chimique contenue dans la cavité illustrée en figure 2B.

Malheureusement en pratique, ces procédés de mesure directe par spectroscopie dans une cavité résonante s'avèrent impossibles ou très complexes à mettre en oeuvre. En effet, il faut pouvoir injecter dans la cavité une puissance suffisante, il faut que cette puissance soit constante ou suive une variation connue, et il faut que le signal détecté ne soit pas trop bruité.

Pour éviter ces inconvénients, on a eu recours à des procédés de détection par mesure de décroissance d'énergie optique dans une cavité résonante, couramment désignés dans la technique par le sigle CRDS d'après les termes anglo-saxons "Cavity Ring-Down Spectroscopy". Selon ce procédé, le faisceau laser est envoyé dans la cavité, puis l'injection de photons est brutalement interrompue. Les photons restent alors piégés dans la cavité et leur intensité décroît de façon exponentielle en fonction du temps. Si la cavité est vide, ou pour une longueur d'onde qui ne correspond pas à une raie d'absorption d'un gaz contenu dans la cavité, cette décroissance présentera une certaine constante de temps déterminée essentiellement par les pertes des miroirs à la longueur d'onde considérée. Si la cavité contient une espèce chimique présentant une raie d'absorption à la longueur d'onde des photons injectés, cette constante de temps sera réduite. Un avantage de ce procédé est que l'on s'affranchit du bruit dû aux fluctuations de l'intensité injectée dans la cavité.

Pour injecter une quantité suffisante de lumière dans la cavité résonante, on a proposé un procédé de type CRDS dans lequel la fréquence d'un laser continu à semiconducteur est asservie par une rétroaction optique en provenance de la cavité. Un tel procédé est décrit dans la demande de brevet PCT WO99/57542. Ce procédé donne des résultats satisfaisants, mais la durée de détermination de la courbe d'absorption est relativement longue puisque, à chaque mesure, un seul point de la courbe d'absorption est calculé.

EP 1 116 948 décrit un dispositif selon le préambule de la revendication 1. Un objet de la presente invention est d'obtenir une figure de transmission sensiblement plate ou légèrement croissante. Pour atteindre cet objet, la présente invention prévoit un dispositif selon la revendication 1.

Selon un mode de réalisation de la présente invention, ce dispositif comprend un moyen de réglage grossier de la distance du laser à la cavité.

Selon un mode de réalisation de la présente invention, le moyen de réglage fin de la phase de la rétroaction optique est un moyen de réglage de la distance optique laser-cavité.

Selon un mode de réalisation de la présente invention, le moyen de réglage fin est un miroir de renvoi monté sur une céramique piézo-électrique disposé dans le chemin optique du laser à la cavité.

Selon un mode de réalisation de la présente invention, le moyen de réglage du taux de couplage laser-cavité est un atténuateur optique atténuant la lumière renvoyée par la cavité au laser, tel qu'une cellule de Faraday.

Selon un mode de réalisation de la présente invention, le laser est une diode laser.

Selon un mode de réalisation de la présente invention, la cavité est du type en V, comprenant un premier miroir oblique par rapport à la direction d'incidence du laser, un deuxième miroir orthogonal à la direction d'incidence du laser, et un troisième miroir formant cavité avec les deux premiers miroirs.

Selon un mode de réalisation de la présente invention, la cavité est une cavité classique à deux miroirs.

La présente invention vise aussi un procédé d'utilisation du dispositif ci-dessus consistant à faire varier le chemin optique laser-cavité d'une valeur de l'ordre de la longueur d'onde du laser.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente le schéma général d'un dispositif mettant en oeuvre un procédé de mesure d'absorption par spectroscopie dans une cavité résonante ;
les figures 2A et 2B représentent respectivement la transmission d'une cavité résonante contenant une espèce chimique excitée mode par mode à intensité constante et la courbe d'absorption de l'espèce ;
les figures 3A à 3C représentent des courbes en fonction de la fréquence, respectivement pour une raie d'absorption, pour une raie laser et pour des modes longitudinaux d'une cavité ;
les figures 4A et 4B représentent des courbes caractérisant l'accrochage en fréquence entre un laser et une cavité en présence de rétroaction optique ;
La figure 5 représente l'allure de la courbe de transmission de la cavité obtenue pour divers réglages de la longueur de la cavité par rapport à la distance laser-cavité ;
la figure 6 représente, pour une distance donnée laser-cavité, l'influence d'une faible variation (de l'ordre de λ/2) de cette distance ;
la figure 7 représente un mode de réalisation particulier d'un dispositif de détection de gaz;
la figure 8 représente un autre mode de réalisation particulier d'un dispositif de détection de gaz ; et
la figure 9 représente un exemple de spectre obtenu selon l'invention pour une distance laser-cavité accordée.

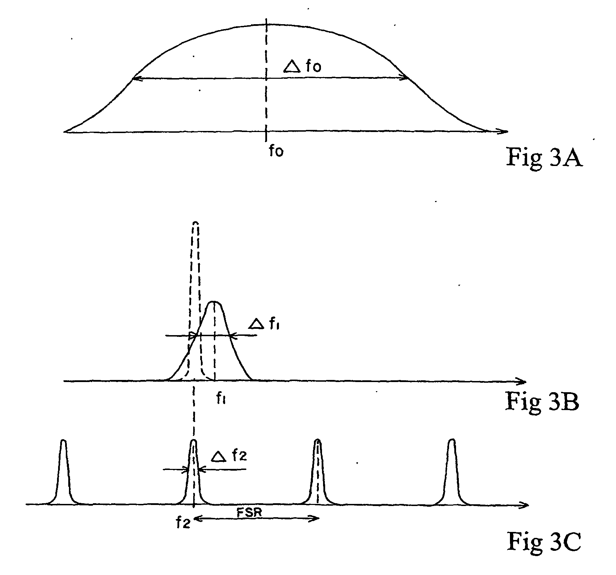

Avant de décrire la présente invention, la demanderesse tient à rappeler que, dans le domaine de la spectroscopie optique, des termes tels que raie fine, système monomode, etc. ont souvent des acceptions différentes selon les auteurs. On va donc préciser ci-dessous en relation avec les figures 3A à 3C le vocabulaire qui sera utilisé ici.

La figure 3A représente l'intensité d'une raie d'absorption d'une espèce gazeuse en fonction de la fréquence. La raie a une fréquence centrale f0 et une largeur Δf0. A titre d'exemple, la raie d'absorption à 1651 nm du méthane présente une largeur de raie d'absorption Δf0 = 4,4 GHz (ce qui correspond à une plage de longueurs d'onde de 0,04 nm).

Un laser continu tel qu'une diode laser ou autre laser à semiconducteur à fréquence réglable émettra une raie f1 de largeur Δf1 telle que représentée en figure 3B. De façon générale, Δf1 sera nettement inférieure à la largeur Δf0 de la raie d'absorption, et l'on se placera toujours ici dans ce cas.

Par ailleurs, comme l'illustre la figure 3C, une cavité optique résonante de longueur donnée pourra résonner sur l'une ou l'autre de plusieurs fréquences ou modes longitudinaux espacés d'une distance FSR ou intervalle spectral libre. Pour la simplicité de l'exposé on appellera f2 la fréquence d'un mode de la cavité en notant qu'il faudrait parler d'une fréquence f2 + kFSR où k est un entier positif, négatif ou nul. Pour chacun des modes longitudinaux, la largeur de résonance possible Δf2 est très faible, c'est-à-dire petite devant la largeur Δf1 de la raie laser qui est elle-même petite devant la largeur Δf0 de la raie d'absorption. On considérera le cas fréquent en pratique où Δf1 est inférieure à la distance FSR entre modes de la cavité. Par exemple, FSR pourra être égal à 300 MHz (environ 10 fois moins que la largeur de la raie d'absorption à étudier) .

Comme le représente la figure 3B, l'énergie de la raie laser est répartie en moyenne dans le temps sur les fréquences appartenant à la largeur Δf1 et seule la correspondance hasardeuse des fréquences comprises dans la largeur du mode de la cavité Δf2 permettra l'injection de la cavité. On voit donc que la quantité de photons injectée dans la cavité est faible devant l'intensité totale de la raie laser. En outre, cette quantité sera fluctuante du fait des fluctuations de la fréquence laser et les mesures seront affectées d'un bruit important. Selon la présente invention, la cavité résonante est utilisée comme source d'une rétroaction optique positive aux fréquences des modes de résonance vers le laser qui est choisi d'un type réagissant fortement à une rétroaction optique.

On rappellera que la cavité résonante pour être efficace du point de vue de la détection de l'absorption doit présenter des miroirs hautement réflecteurs, par exemple des miroirs dont le coefficient de réflexion s'approche de 99,998, ce qui correspond à une finesse de l'ordre de 150000. Ainsi, quand le laser envoie de la lumière sur le miroir d'entrée 2-1 de la cavité résonante, cette lumière est pour la plus grande partie renvoyée sur le laser. Ceci est susceptible de perturber le laser. C'est pourquoi dans les montages classiques on utilise un isolateur optique entre le laser et la cavité. Dans le cadre de la présente invention, on utilise un montage propre à renvoyer sélectivement sur le laser une bande de longueur d'onde de largeur correspondant à la largeur d'un mode de la cavité pour une fréquence de résonance de la cavité. Si le laser émet de l'énergie autour de la fréquence f1 (figure 3B) et que la raie laser contient de l'énergie à une fréquence f2, la cavité entre en résonance et on ne renvoie sur le laser que les ondes correspondant à cette fréquence de résonance. Si le laser est sensible à une rétroaction optique, ce qui est le cas par exemple pour les lasers à semiconducteur, la raie du laser s'affinera et s'intensifiera sur la largeur de bande renvoyée. Ainsi, le laser, au lieu d'envoyer une raie de largeur Δf1 centrée sur la fréquence f1, émettra une raie intense de largeur inférieure à Δf2 centrée sur la fréquence f2 d'un mode de la cavité, comme cela est représenté en pointillés en figure 3B. Ainsi, le laser n'enverra dans la cavité que des photons à la fréquence utile (une fréquence de résonance de la cavité) et l'injection atteindra son optimum. On peut dire que le laser s'asservit sur un mode de la cavité.

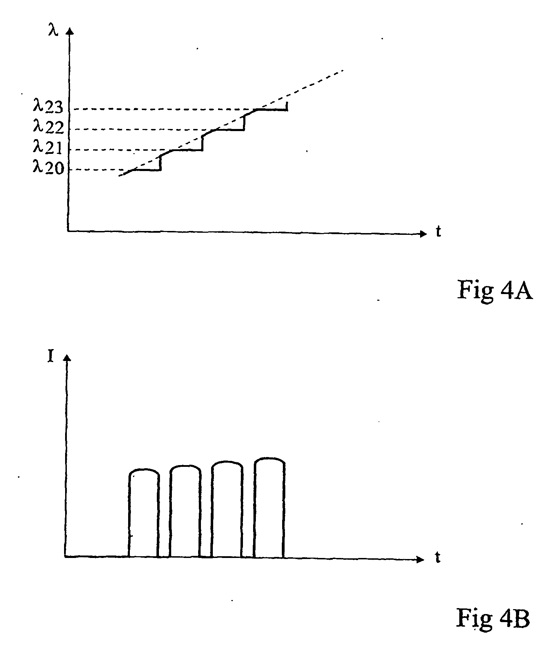

En considérant une diode laser, quand une rampe de courant est appliquée, comme le représente la courbe en pointillés 40 de la figure 4A, la longueur d'onde λ émise tend à croître progressivement. Comme on l'a indiqué, en raison du couplage avec la cavité, pour chacune des fréquences propres ou fréquences des modes longitudinaux de la cavité f2₀, f2₁, f2₂, f2₃... la fréquence du laser aura tendance à se verrouiller sur la fréquence considérée. Ainsi, la transmission de la cavité est sensiblement telle que représentée en figure 4B, c'est-à-dire que la cavité transmet pour chaque fréquence de verrouillage f2₀, f2₁, f2₂, f2₃...

Ce qui précède décrit le cas idéal où la rétroaction optique est optimisée pour tous les modes de la cavité couverts par le balayage laser. En pratique, cette situation n'est pas obtenue : l'intensité diffère d'un mode à l'autre et on observe des instabilités.

L'objet de la présente invention est de prévoir des aménagements au montage optique permettant d'obtenir des mesures satisfaisantes.

Selon un premier aspect, on prévoit d'améliorer le couplage laser-cavité. En effet, dans de nombreux cas, l'action d'une rétroaction optique sur un laser fait que l'accrochage de celui-ci sur un mode de la cavité est extrêmement fort. Par conséquent, quand le courant du laser est modifié pour normalement l'amener à effectuer un balayage en fréquence, au lieu de rester bloqué par rétroaction optique seulement sur une fraction d'intervalle spectrale libre, comme cela est représenté en figure 4A, le laser a tendance à rester accroché plus longtemps, couramment sur un intervalle plus grand qu'un intervalle spectral libre, et même éventuellement sur deux intervalles spectraux libres ou plus, et ce de façon irrégulière d'un mode à l'autre ou d'un balayage à un autre. La mesure obtenue n'est alors plus significative puisque l'échantillonnage de la courbe d'absorption n'est plus régulier. Pour pallier cet inconvénient, la présente invention prévoit de placer dans le trajet entre le laser et la cavité un atténuateur réglable, de préférence actif seulement pour atténuer l'onde revenant de la cavité vers le laser ou plus généralement le taux de couplage laser-cavité. On pourra par exemple choisir un atténuateur de Faraday. On règle cet atténuateur pour que le taux de couplage soit propre à donner une gamme d'accrochage légèrement inférieure à l'intervalle entre les modes de la cavité ou à un multiple entier de cet intervalle.

Selon un aspect de la présente invention, les inventeurs ont également montré qu'un autre paramètre important réside dans un accord satisfaisant entre la phase de l'onde émise par le laser et la phase de l'onde renvoyée par la cavité.

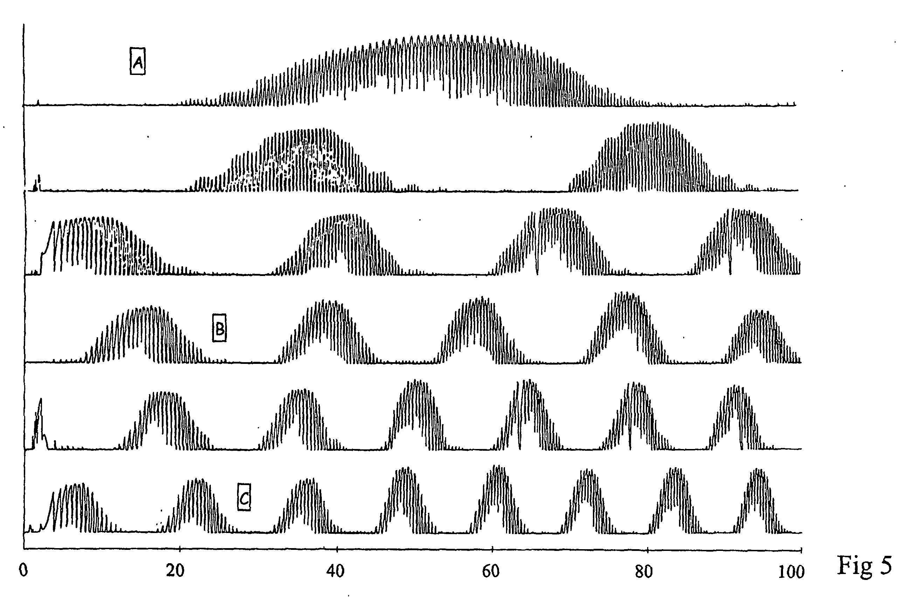

La figure 5 représente l'allure de la transmission obtenue en sortie d'une cavité quand on balaye la fréquence du laser à travers plusieurs modes de cette cavité avec une rétroaction optique comme cela a été décrit précédemment. La condition de phase laser-cavité peut être modifié par un ajustement de la distance L_{b} entre le laser et la cavité. Quand cette distance est du même ordre de grandeur que la longueur L d'un bras de la cavité (en supposant une cavité unique ou une cavité à deux bras égaux), on obtient une courbe sensiblement plate. Quand cette distance devient égale à 95 % de la longueur de la cavité, on obtient une courbe de transmission telle que celle représentée en A en figure 5. Pour 85 %, on obtient une courbe telle que celle représentée en B, et pour 70 % on obtient une courbe telle que celle représentée en C. Les autres courbes de la figure 5 sont des courbes intermédiaires.

Ainsi, selon l'invention, on se place dans un cas où la distance laser-cavité est égale à la longueur de la cavité ou à un multiple entier de cette longueur pour obtenir une figure de transmission sensiblement plate (ou légèrement croissante) telle que tous les modes de la cavité balayés par le laser soient également excités au maximum de transmission. Il est encore possible pour des distances laser-cavité judicieusement choisies de n'exciter strictement qu'un mode sur deux, ou sur trois, etc., chacun de ces modes étant également excités au maximum de transmission et l'on obtient une nouvelle fois une figure de transmission plate ; c'est-à-dire que la distance laser-cavité peut être un sous-multiple entier de la longueur de la cavité (plus éventuellement un nombre entier de fois la longueur de la cavité). On pourra également comme cela est indiqué ci-après se placer dans une autre configuration à condition de moduler la distance laser-cavité.

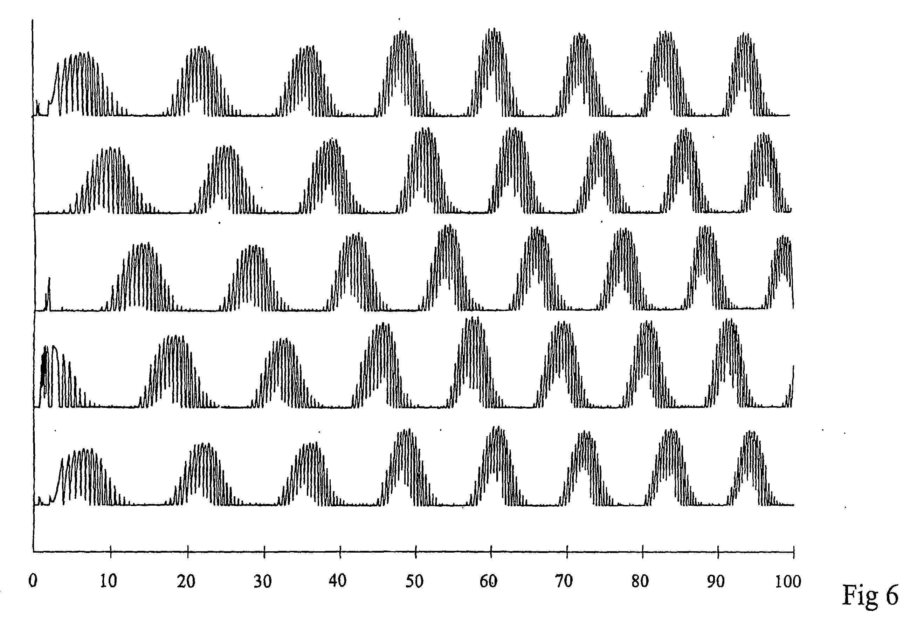

La figure 6 représente, en haut, une courbe similaire à celle de la figure 5C. La courbe de transmission de la cavité comprend des groupes de modes pour lesquels l'intensité est relativement forte séparés par des groupes de modes d'intensité très faible.

D'autre part, si on fait varier la distance laser-cavité de l'ordre d'une demi longueur d'onde, on passe progressivement de la courbe représentée à la ligne supérieure de la figure 6 à la courbe représentée à la ligne inférieure de la figure 6. Ainsi, en moyenne, si l'on effectue plusieurs mesures et que l'on module la distance laser-cavité sur une plage supérieure à λ/2, on aura en moyenne une courbe plate et on pourra alors déterminer les facteurs liés à l'absorption de la cavité.

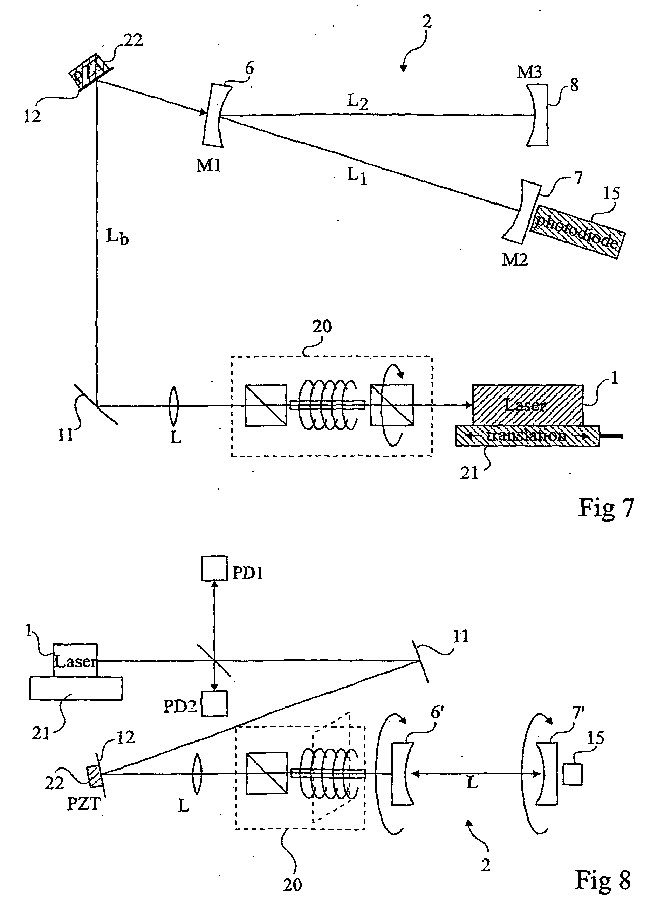

Des exemples de dispositifs de détection de gaz sont illustrés en figures 7 et 8.

En figure 7, le laser est désigné par la référence 1. La cavité 2 est une cavité en V comprenant un miroir d'entrée 6 et des miroirs 7 et 8 disposés sensiblement de la façon représentée pour former une cavité résonante. Le faisceau direct envoyé par le laser est réfléchi par des miroirs 11 et 12 vers la face arrière du miroir 6 et vers le second miroir 7. La lumière réfléchie par le miroir 7 est renvoyée par la face avant du miroir 6 vers le miroir 8. Quand la cavité n'est pas accordée, le faisceau global envoyé par le laser et arrivant sur la face arrière du miroir n'est pas dirigé en retour vers le laser. Le faisceau direct arrivant sur le miroir 7 est renvoyé sur le miroir 6. Toutefois, son intensité à la sortie du miroir 6 est extrêmement faible puisqu'il subit la double atténuation de transmission du miroir 6 et peut être considérée comme négligeable tant que la cavité 2 n'est pas accordée. L'intensité renvoyée devient importante seulement quand la longueur d'onde de résonance de la cavité (f2 en figure 3C) est envoyée par le laser. C'est alors que le phénomène de rétroaction et d'affinement de raie se produit. Une injection maximum se produit alors dans la cavité. Un photodétecteur 15, disposé par exemple derrière l'un des miroirs 7 ou 8, permet d'étudier la courbe de transmission liée à la présence ou à l'absence d'une raie d'absorption d'une espèce recherchée dans la cavité, comme cela est illustré en figure 2A.

On introduit un isolateur de Faraday 20 entre le laser et la cavité. Avec une diode laser, on peut utiliser un isolateur de Faraday ajustable de faible qualité et coût pouvant présenter un taux d'atténuation compris entre 1/10 et 1/1000. Le laser est monté sur un dispositif 21 permettant son réglage en translation et l'un des miroirs de renvoi, par exemple le miroir 12 est monté sur une céramique piézo-électrique 22 pour permettre de contrôler et éventuellement de moduler le chemin optique sur une plage de l'ordre de la longueur d'onde du laser. Contrairement à ce qui est représenté dans la figure, la distance L_{b} entre la face arrière du miroir M1 et la sortie du laser est du même ordre de grandeur que la longueur L1 d'un bras de la cavité (en supposant que les deux bras ont la même longueur). En outre, on pourra utiliser divers moyens classiques connus des dispositifs antérieurs. Par exemple, on pourra utiliser des séparatrices pour défléchir des parties du faisceau laser vers d'autres photodétecteurs ou vers une cellule de référence qui peut être associée à un détecteur pour permettre un réglage initial du laser.

La figure 8 représente à titre d'exemple une variante de réalisation d'un dispositif de détection de gaz dans laquelle de mêmes éléments qu'en figure 7 sont désignés par de mêmes références. Dans ce mode de réalisation, la cavité résonante 2 est une cavité classique constituée de deux miroirs face à face 6' et 7' et un isolateur à polarisation est disposé entre le laser et la cavité pour empêcher le retour vers le laser d'une réflexion directe sur la face arrière du miroir d'entrée et pour transmettre vers le laser une radiation ayant subi une résonance dans la cavité dont la polarisation a été modifiée au cours des multiples allers-retours.

On prévoira également de préférence dans les deux montages d'autres éléments tels qu'une lentille L pour ajuster les modes transverses du laser et de la cavité.

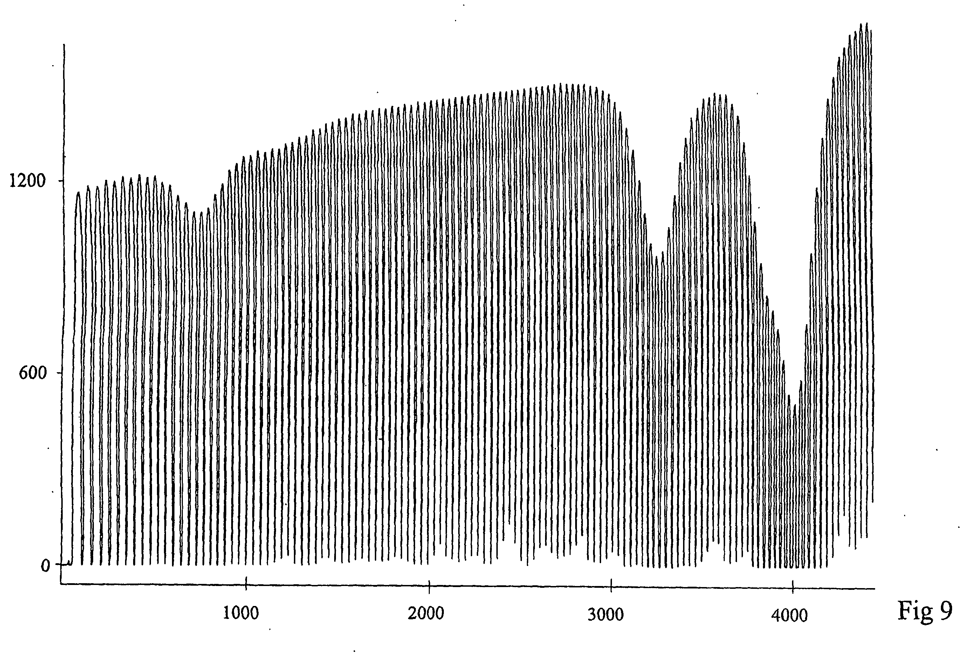

La figure 9 représente un exemple de transmission d'une cavité selon la présente invention contenant de la vapeur d'eau pour un réglage optimal de la distance laser-cavité. On notera que l'intensité des modes est sensiblement constante (en fait régulièrement croissante) sauf aux emplacements où apparaissent des raies d'absorption de la vapeur d'eau.

### Influence des modes transverses de la cavité

Dans la description précédente, et plus particulièrement en figure 3C, on a représenté la cavité comme présentant des modes de résonance à des fréquences f2 séparées les unes des autres d'un intervalle égal à l'intervalle spectral libre FSR de la cavité. Il s'agissait là d'une simplification. En effet, une cavité est susceptible de résonner sur plusieurs modes transverses électromagnétiques (TEM), généralement désignés par TEMᵢⱼ.

Pour éviter l'influence de ces modes latéraux, on pourra, comme cela est expliqué dans la demande de brevet PCT WO 99/57542, choisir une cavité réglée pour fonctionner dans un mode proche d'un mode dégénéré, les modes transverses secondaires étant tous regroupés d'un même côté d'un mode transverse principal correspondant, le laser effectuant un balayage dans le sens partant du côté opposé à celui où se trouvent les modes latéraux secondaires.

Bien entendu, la présente invention est susceptible de diverses variantes et modifications qui apparaîtront à l'homme de l'art. En particulier, divers types de cavités et divers systèmes d'analyse pourront être utilisés, ainsi que divers systèmes de contrôle de l'intensité et de la phase de la rétroaction. On pourra par exemple utiliser des cavités à deux miroirs confocaux ou des cavités à plus de trois miroirs. La relation entre la distance laser-cavité et la longueur du ou des bras de la cavité étant choisie en conséquence. On pourra également prévoir des systèmes de régulation de température pour stabiliser notamment la cavité et la cellule de Faraday.

## Revendications

1. Dispositif de détection de gaz à l'état de traces comprenant :
une cavité optique résonante (2) contenant une espèce chimique à analyser ;
un laser sensible à une rétroaction optique (1), couplé par rétroaction optique à la cavité optique et apte à être balayé en fréquence ;
un moyen de réglage du taux de couplage laser-cavité ;
un moyen de réglage fin (22) de la phase de la rétroaction optique ; et
un moyen de mesure (15) de la lumière transmise par la cavité ;
**caractérisé en ce que** le rapport entre la distance laser-cavité et la longueur d'un ou plusieurs bras de la cavité est réglé à un nombre entier, à l'inverse d'un nombre entier ou à un rapport de nombres entiers.

2. Dispositif selon la revendication 1, **caractérisé en ce qu'**il comprend un moyen de réglage grossier (21) de la distance du laser à la cavité.

3. Dispositif selon la revendication 1, **caractérisé en ce que** le moyen de réglage fin (22) de la phase de la rétroaction optique est un moyen de réglage de la distance optique laser-cavité.

4. Dispositif selon la revendication 3, dans lequel le moyen de réglage fin est un miroir de renvoi monté sur une céramique piézo-électrique (22) disposé dans le chemin optique du laser à la cavité.

5. Dispositif selon la revendication 1, **caractérisé en ce que** le moyen de réglage du taux de couplage laser-cavité est un atténuateur optique (20) atténuant la lumière renvoyée par la cavité au laser, tel qu'une cellule de Faraday.

6. Dispositif selon la revendication 1, **caractérisé en ce que** le laser est une diode laser.

7. Dispositif selon la revendication 1, dans lequel la cavité est du type en V, comprenant un premier miroir (6) oblique par rapport à la direction d'incidence du laser, un deuxième miroir (7) orthogonal à la direction d'incidence du laser, et un troisième miroir (8) formant cavité avec les deux premiers miroirs (6, 7).

8. Dispositif selon la revendication 1, dans lequel la cavité est une cavité classique à deux miroirs.

9. Dispositif selon la revendication 1, **caractérisé en ce qu'**il comprend des moyens pour faire varier le chemin optique laser-cavité d'une valeur de l'ordre de la longueur d'onde du laser.

## Claims

1. A device for detecting gas in trace amounts, comprising:
a resonant optical cavity (2) containing a chemical species to be analyzed;
a laser sensitive to an optical feedback (1), coupled by optical feedback to the optical cavity and capable of being frequency-scanned;
means for adjusting the laser-cavity coupling rate;
means for finely adjusting (22) the phase of the optical feedback; and
means for measuring (15) the light transmitted by the cavity;
**characterized in that** the ratio between the laser-cavity distance and the length of one or several arms of the cavity is adjusted to an integer, to the inverse of an integer, or to a ratio of integers.

2. The device of claim 1, wherein the device comprises a means for roughly adjusting (21) the distance from the laser to the cavity.

3. The device of claim 1, wherein the means for finely adjusting (22) the phase of the optical feedback is a means for setting the laser-cavity optical distance.

4. The device of claim 3, wherein the fine adjustment means is a mirror disposed on a piezo-electric ceramic (22) arranged in the optical path from the laser to the cavity.

5. The device of claim 1, wherein the means for adjusting the laser-cavity coupling rate is an optical attenuator (20) attenuating the light sent back by the cavity to the laser, such as a Faraday cell.

6. The device of claim 1, wherein the laser is a laser diode.

7. The device of claim 1, wherein the cavity is of V-shaped type, comprising a first mirror (6) oblique with respect to the laser incidence direction, a second mirror (7) orthogonal to the laser incidence direction, and a third mirror (8) forming a cavity with the first two mirrors (6, 7).

8. The device of claim 1, wherein the cavity is a conventional two-mirror cavity.

9. The device of claim 1, comprising means for varying the laser-cavity optical path by a value on the order of the laser wavelength.

## Patentansprüche

1. Vorrichtung zum Detektieren von Gasen in Spurenmengen, die folgendes umfaßt: eine optische Resonatorkavität (2), welche eine zu analysierende chemische Spezies enthält;
ein auf einer optischen Rückkopplung reagierender Laser (1), der über eine optische Rückkopplung mit der optischen Kavität gekoppelt ist und dessen Frequenz durchgefahren werden kann;
eine Einrichtung zum Einstellen der Kopplungsstärke zwischen Laser und Kavität;
eine Einrichtung zum Feineinstellen (22) der Phase der optischen Rückkopplung; und
eine Einrichtung zum Messen (15) des Lichts, das von der Kavität transmittiert wird; **dadurch gekennzeichnet, daß** das Verhältnis zwischen der Wegstrecke zwischen Laser und Kavität und der Länge von einem oder mehreren Armen der Kavität auf eine ganze Zahl, auf das Inverse einer ganzen Zahl oder auf ein Verhältnis ganzer Zahlen eingestellt ist.

2. Vorrichtung nach Anspruch 1, bei der die Vorrichtung eine Einrichtung zum Grobeinstellen (21) der Wegstrecke von dem Laser zu der Kavität aufweist.

3. Vorrichtung nach Anspruch 1, bei der die Einrichtung zum Feineinstellen (22) der Phase der optischen Rückkopplung eine Einrichtung zum Festlegen der optischen Wegstrecke zwischen Laser und Kavität ist

4. Vorrichtung nach Anspruch 3, bei der die Einrichtung zum Feineinstellen ein Spiegel ist, der auf einer piezoelektrischen Keramik (22) angeordnet ist, die in dem optischen Weg von dem Laser zu der Kavität eingerichtet ist

5. Vorrichtung nach Anspruch 1, bei der die Einrichtung zum Einstellen der Kopplungsstärke zwischen Laser und Kavität ein optischer Dämpfer (20) ist, der das Licht dämpft, das von der Kavität zu dem Laser zurückgesendet wird, wie ein Faraday-Element.

6. Vorrichtung nach Anspruch 1, bei der der Laser eine Laserdiode ist

7. Vorrichtung nach Anspruch 1, bei der die Kavität ein V-förmiger Typ ist und einen ersten Spiegel (6), der gegenüber der Lasereinfallsrichtung geneigt ist, einen zweiten Spiegel (7), der orthogonal zu der Lasereinfallsrichtung ist, und einen dritten Spiegel (8) aufweist, der eine Kavität mit den ersten zwei Spiegeln (6, 7) bildet.

8. Vorrichtung nach Anspruch 1, bei der die Kavität eine herkömmliche Zwei-Spiegel-Kavität ist.

9. Vorrichtung nach Anspruch 1, die eine Einrichtung zum Verändern des optischen Weges zwischen Laser und Kavität um einen Wert in der Größenordnung der Laserwellenlänge aufweist.
